# EUROPEAN PATENT APPLICATION

(11) **EP 4 625 337 A1**
(43) Date of publication of application: **01.10.2025**
(21) Application number: 24198957.3
(22) Date of filing: 06.09.2024
(51) Int. Cl.: G06T 13/80, G06T 15/20

(54) **METHOD AND APPARATUS FOR DISPLAYING VEHICLE MODEL**

(30) Priority: 28.03.2024 CN 202410371621
(71) Applicant: Xiaomi EV Technology Co., Ltd., 100176 Beijing (CN)
(72) Inventor: WANG, Xiuyang, Beijing, 100176 (CN); ZHANG, Bo, Beijing, 100176 (CN)
(74) Representative: Zimmermann, Tankred Klaus

(57) **Abstract**

A method and apparatus for displaying a vehicle model. The method includes: transmitting (5110), by a desktop process, animation generation information to a vehicle process; and generating (5120), by the vehicle process, a vehicle animation according to the animation generation information, and displaying the vehicle animation between pictures of two driving states. The vehicle animation is displayed in a mode by transmitting the animation generation information to the vehicle process by the desktop process, and a switching mode of two vehicle models is provided in an inter-process communication mode.

## Description

### TECHNICAL FIELD

The present invention or disclosure belongs to the technical field of vehicles, and particularly relates to a method for displaying a vehicle model, an apparatus for displaying a vehicle model, a computer-readable storage medium, and an electronic device.

### BACKGROUND OF THE INVENTION

In application scenarios such as smart cockpits, a vehicle model in a parking state and a vehicle model in a driving state refer to 3-dimension (3D) vehicle models that are rendered on an in-vehicle center control display through the computer graphics technology. The development of 3D vehicle models mainly involves modeling, rendering and interaction of vehicle models, and the application of the artificial intelligence technology contributes new ideas for the intelligent and customized presentation of vehicle models. The 3D vehicle models provide drivers with a more comprehensive, intuitive and vivid driving experience.

### SUMMARY OF THE INVENTION

In order to solve problems in the related art, the present invention provides a method for displaying a vehicle model, an apparatus for displaying a vehicle model, a non-transitory computer-readable storage medium, and an electronic device.

According to a first aspect of examples of the present invention, a method for displaying a vehicle model is provided. The method includes:
transmitting, by a desktop process, animation generation information to a vehicle process; and
generating, by the vehicle process, a vehicle animation according to the animation generation information, and displaying the vehicle animation between pictures of two driving states.

Optionally, after displaying the vehicle animation between pictures of the two driving states, the method further includes:
loading, by the desktop process, a second vehicle model, and hiding a first vehicle model, where the first vehicle model and the second vehicle model represent the two driving states respectively.

Optionally, loading, by the desktop process, the second vehicle model includes:
obtaining, by the desktop process, a first vehicle image corresponding to the first vehicle model, and loading the second vehicle model; and
generating, by the desktop process, a first blended animation according to the first vehicle image, and displaying the first blended animation.

Optionally, the first vehicle model includes a parking state model or a driving state model; the second vehicle model includes a driving state model or a parking state model; and the parking state model represents that the first vehicle model or the second vehicle model is in a parking state, and the driving state model represents that the first vehicle model or the second vehicle model is in a driving state.

Optionally, prior to transmitting, by the desktop process, the animation generation information to the vehicle process, the method further includes:
obtaining, by the desktop process, a first rendering parameter of the first vehicle model and a second rendering parameter of the second vehicle model; and
adjusting, by the desktop process, the first rendering parameter and/or the second rendering parameter in response to the first rendering parameter being different from the second rendering parameter, so as to make the first rendering parameter and the second rendering parameter the same.

Optionally, prior to transmitting, by the desktop process, the animation generation information to the vehicle process, the method further includes:
obtaining, by the desktop process, a first vehicle resource of the first vehicle model and a second vehicle resource of the second vehicle model, so as to load the first vehicle model and the second vehicle model according to the first vehicle resource and the second vehicle resource respectively, where the first vehicle resource is the same as the second vehicle resource.

Optionally, prior to the vehicle process displays the vehicle animation according to the animation generation information, the method further includes:
obtaining, by the desktop process, a first viewing angle of the first vehicle model and a second viewing angle of the second vehicle model; and
adjusting, by the desktop process, the first vehicle model according to the first vehicle resource in response to the first viewing angle being different from the second viewing angle, and/or adjusting the second vehicle model according to the second vehicle resource.

Optionally, displaying the vehicle animation between pictures of the two driving states includes:
obtaining, by the desktop process, a first vehicle image corresponding to a first vehicle model, loading a second vehicle model, and hiding the first vehicle model;
generating, by the desktop process, a first blended animation according to the first vehicle image, and displaying the first blended animation; and
displaying, by the vehicle process, the vehicle animation between the pictures of the two driving states.

Optionally, the vehicle process includes a parking process and/or a driving process.

Optionally, the animation generation information includes one or more selected from an animation duration, an animation delay, an animation playback curve and animation starting and ending positions.

Optionally, the desktop process and the vehicle process are interactively connected in a Socket inter-process communication manner

According to a second aspect of examples of the present invention, an apparatus for displaying a vehicle model is provided. The apparatus includes:
an information sender configured to transmit, by a desktop process, animation generation information to a vehicle process; and
an animation display configured to generate, by the vehicle process, a vehicle animation according to the animation generation information, and display the vehicle animation between pictures of the two driving states.

Optionally, the apparatus for displaying a vehicle model is configured to:
load, by the desktop process, a second vehicle model, and hide a first vehicle model, where the first vehicle model and the second vehicle model represent the two driving states respectively.

Optionally, the apparatus for displaying a vehicle model is configured to:
obtain, by the desktop process, a first vehicle image corresponding to the first vehicle model, and load the second vehicle model; and
generate, by the desktop process, a first blended animation according to the first vehicle image, and display the first blended animation.

Optionally, the first vehicle model includes a parking state model or a driving state model; the second vehicle model includes a driving state model or a parking state model; and the parking state model represents that the first vehicle model or the second vehicle model is in a parking state, and the driving state model represents that the first vehicle model or the second vehicle model is in a driving state.

Optionally, the apparatus for displaying a vehicle model is configured to:
obtain, by the desktop process, a first rendering parameter of the first vehicle model and a second rendering parameter of the second vehicle model; and
adjust, by the desktop process, the first rendering parameter and/or the second rendering parameter in response to the first rendering parameter being different from the second rendering parameter, so as to make the first rendering parameter and the second rendering parameter the same.

Optionally, the apparatus for displaying a vehicle model is configured to:
obtain, by the desktop process, a first vehicle resource of the first vehicle model and a second vehicle resource of the second vehicle model, so as to load the first vehicle model and the second vehicle model according to the first vehicle resource and the second vehicle resource respectively, where the first vehicle resource is the same as the second vehicle resource.

Optionally, the apparatus for displaying a vehicle model is configured to:
obtain, by the desktop process, a first viewing angle of the first vehicle model and a second viewing angle of the second vehicle model; and
adjust, by the desktop process, the first vehicle model according to the first vehicle resource in response to the first viewing angle being different from the second viewing angle, and/or adjust the second vehicle model according to the second vehicle resource.

Optionally, the animation display is configured to:
obtain, by the desktop process, a first vehicle image corresponding to a first vehicle model, load a second vehicle model, and hide the first vehicle model;
generate, by the desktop process, a first blended animation according to the first vehicle image, and display the first blended animation; and
display, by the vehicle process, the vehicle animation between the pictures of the two driving states.

Optionally, the vehicle process includes a parking process and/or a driving process.

Optionally, the animation generation information includes one or more selected from an animation duration, an animation delay, an animation playback curve and animation starting and ending positions.

Optionally, the desktop process and the vehicle process are interactively connected in a Socket inter-process communication manner.

According to a third aspect of examples of the present invention, a non-transitory computer-readable storage medium is provided. The non-transitory computer-readable storage medium stores a computer program instruction. The program instruction implements steps of the method for displaying a vehicle model according to any one of the examples of the first aspect of the present invention when executed by a processor.

According to a fourth aspect of examples of the present invention, an electronic device is provided. The electronic device includes:
one or more memories storing a computer program; and
one or more processors configured to execute the computer program in the memory, so as to implement steps of the method for displaying a vehicle model according to any one of the examples of the first aspect of the present invention.

Optionally, where after displaying the vehicle animation between pictures of the two driving states, the one or more processors are further collectively configured to:
load, by the desktop process, a second vehicle model, and hiding a first vehicle model, where the first vehicle model and the second vehicle model represent the two driving states respectively.

The technical solutions according to examples of the present invention can have the beneficial effects as follows:
In the method and apparatus provided according to examples of the present invention, the vehicle animation is displayed in a mode by transmitting the animation generation information to the vehicle process by the desktop process. On one hand, a switching mode of two vehicle models is provided in an inter-process communication mode, such that technical problems of poor stability and high resource consumption caused by using a single process mode in the related art are solved. On the other hand, the vehicle animation is used as a transition effect when switching the two vehicle models, such that the calculation and processing time is reserved for the change of vehicle models, which brings a smoother animation effect and visual experience to the user, provides a better interactive experience in the process of starting and stopping a vehicle by the user, and offers a more immersive sensory experience to the user in application scenarios such as smart cockpits.

It should be understood that both the foregoing general description and the following detailed description are illustrative and interpretative merely and do not limit the present invention.

### BRIEF DESCRIPTION OF DRAWINGS

The accompanying drawings are incorporated in the description as a constituent part of the description, illustrate examples conforming to the present invention, and serve to explain the principles of the present invention together with the specification.
Fig. 1 is a schematic flowchart of a method for displaying a vehicle model according to an example of the present invention;
Fig. 2 is a schematic flowchart of a method for loading a second vehicle model according to an example of the present invention;
Fig. 3 is a schematic flowchart of a method for displaying a vehicle animation according to an example of the present invention;
Fig. 4 is a schematic flowchart of a method for adjusting two vehicle models according to an example of the present invention;
Fig. 5 is a schematic flowchart of another method for adjusting two vehicle models according to an example of the present invention;
Fig. 6 is a schematic diagram of comparison of two communication modes in the related art and in a method for displaying a vehicle model according to an example of the present invention;
Fig. 7 is a schematic flowchart of a first method for displaying a vehicle animation in an application scenario according to an example of the present invention;
Fig. 8 is a schematic flowchart of a second method for displaying a vehicle animation in an application scenario according to an example of the present invention;
Fig. 9 is a schematic structural diagram of an apparatus for displaying a vehicle model according to an example of the present invention;
Fig. 10 is a schematic structural diagram of another apparatus for displaying a vehicle model according to an example of the present invention; and
Fig. 11 is a schematic structural diagram of yet another apparatus for displaying a vehicle model according to an example of the present invention.

### DETAILED DESCRIPTION OF THE INVENTION

The following description will be made in detail with reference to examples herein, instances of which are illustrated in the accompanying drawings. When the following description relates to the accompanying drawings, the same numbers in different accompanying drawings refer to the same or similar elements unless otherwise indicated. The embodiments described in the following examples do not represent all embodiments consistent with the present invention. On the contrary, the embodiments are merely instances of apparatuses and methods consistent with some aspects of the present invention as recited in the appended claims.

It should be noted that in the present invention, all the actions of obtaining a signal, information or data are performed on the premise of complying with corresponding data protection laws and regulations of the country where they are located and obtaining the authorization given by an owner of a corresponding device.

In application scenarios such as smart cockpits, a vehicle model in a parking state and a vehicle model in a driving state are three-dimension (3D) vehicle models that are rendered on an in-vehicle center control display through the computer graphics technology. The development of 3D vehicle models mainly involves modeling, rendering and interaction of vehicle models, and application of the artificial intelligence technology contributes new ideas for the intelligent and customized presentation of vehicle models. The 3D vehicle models provide drivers with a more comprehensive, intuitive and vivid driving experience.

However, in the related art, a vehicle model in a parking state and a vehicle model in a driving state are displayed independently, and generally switched in a single process. But since computation and processing are required for a change from the vehicle model in the parking state to the vehicle model in the driving state or from the vehicle model in the driving state to the vehicle model in the parking state, in-process computation or other reasons will lead to a lag. In consequence, when the vehicle model is switched between the two states, the stability is extremely poor, the resource consumption is excessive, and the visual effect for the user is dramatically diminished.

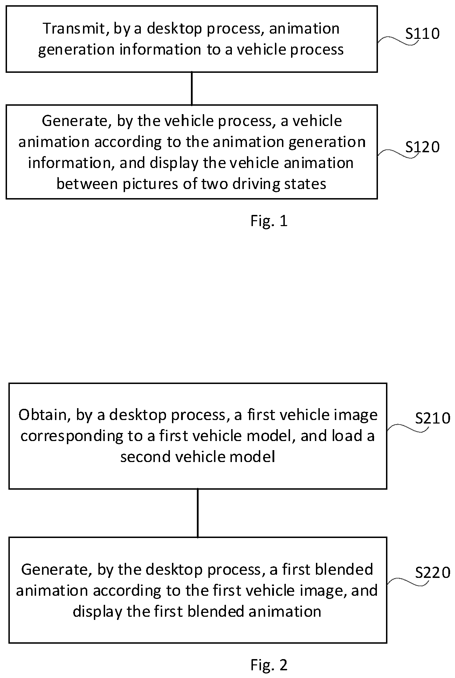

In view of the problems existing in the related art, the present invention provides a method for displaying a vehicle model. Fig. 1 is a flowchart of a method for displaying a vehicle model according to an example. As shown in Fig. 1, the method may at least include:
S110, animation generation information is transmitted to a vehicle process by a desktop process.
S120, a vehicle animation is generated by the vehicle process according to the animation generation information, and the vehicle animation is displayed between pictures of the two driving states.

According to examples of the present invention, the vehicle animation is displayed in a mode by transmitting the animation generation information to the vehicle process by the desktop process. On one hand, a switching mode of two vehicle models is provided in an inter-process communication mode, such that technical problems of poor stability and high resource consumption caused by using a single process mode in the related art are solved. On the other hand, the vehicle animation is used as a transition effect when switching the two vehicle models, such that the calculation and processing time is reserved for the change of vehicle models, which also brings a smoother animation effect and visual experience to the user, provides a better interactive experience in the process of starting and stopping a vehicle by the user, and offers a more immersive sensory experience to the user in application scenarios such as smart cockpits.

Each step of the method for displaying a vehicle model will be described in detail below.

In S110, the animation generation information is transmitted to the vehicle process by the desktop process.

According to examples of the present invention, the desktop process may be a desktop process of a center console of a vehicle or a process corresponding to other structures capable of playing a control role of the vehicle, but is not particularly limited thereto.

Specifically, the desktop process can be configured to control a desktop display content, manage a desktop state, present a rendered content of a vehicle model, transmit a vehicle signal, initiate inter-process communication, etc.

In an optional example, the animation generation information includes one or more selected from an animation duration, an animation delay, an animation playback curve and animation starting and ending positions.

The animation duration may represent duration of a vehicle animation displayed subsequently from the beginning to the end, for example, 2 s, etc. The animation delay may represent a time difference from the moment the desktop process transmits the animation generation information or the vehicle process receives the animation generation information to the moment a corresponding vehicle animation is displayed. The animation playback curve may represent a playback rate of the subsequent vehicle animation at different moments. The animation playback curve may achieve an effect of playing the vehicle animation at the same rate throughout the entire process, accelerating or decelerating the vehicle animation for a certain period or several periods of time, or playing the vehicle animation in an accelerating or decelerating manner throughout the process. The animation starting and ending positions can represent a starting position and an ending position of the vehicle animation played in the center console or other desktops, etc.

In S120, the vehicle animation is generated by the vehicle process according to the animation generation information, and the vehicle animation is displayed between the pictures of the two driving states.

In an example of the present invention, after receiving the animation generation information, the vehicle process may display the corresponding vehicle animation according to parameters included in the animation generation information.

In an optional example, the desktop process and the vehicle process are interactively connected in a Socket inter-process communication manner.

Socket communication is used as an inter-process communication solution, that is, animation messages can be transmitted and received between the desktop process and the vehicle process in a Socket inter-process communication manner, thus a highly efficient solution for the communication between a desktop process and a vehicle process is provided.

Compared to relying on Android layer relay, Socket communication directly establishes connections between applications, so as to avoid performance consumption caused by an additional relay. In this way, communication delay is significantly reduced, such that a speed of response of an animation between different processes is guaranteed.

Socket communication has the advantage of direct point-to-point connection, such that data transmission is more rapid and more efficient. After establishing Socket connection between the desktop process and the vehicle process, the desktop process and the vehicle process can directly transfer data without additional processing through a middle layer, such that complexity and delay of communication are greatly reduced.

Moreover, Socket communication has high flexibility and extensibility. Developers can choose an appropriate communication protocol and data format according to specific requirements so as to satisfy communication requirements of different scenarios. By optimizing parameters and settings of Socket communication, efficiency and stability of communication can be further improved to guarantee timely response to operations such as an animation with high real-time requirements.

In an optional example, the vehicle process includes a parking process and/or a driving process.

When the vehicle process is a parking process, and a vehicle animation from a parking state model to a driving state model is to be generated by the parking process, the desktop process transmits the animation generation information to the parking process. After the parking process receives the animation generation information, the vehicle animation may be displayed between two images of the parking state represented by the parking state model and the driving state represented by the driving state model according to the animation generation information.

It should be noted that the ending position in the animation starting and ending positions in this case is a position where the driving state model is located. Considering that the position is adjustable, a final position of the driving state model can be obtained in advance.

When the vehicle process is a parking process, and a vehicle animation from a driving state model to a parking state model is to be generated by the parking process, the desktop process transmits the animation generation information to the parking process. After the parking process receives the animation generation information, the vehicle animation may be displayed between two images of the parking state represented by the parking state model and the driving state represented by the driving state model according to the animation generation information.

It should be noted that the starting position in the animation starting and ending positions in this case is a position where the driving state model is located. Considering that the position is adjustable, a starting position of the driving state model can be obtained in advance.

When the vehicle process is a driving process, and a corresponding vehicle animation from a parking state model to a driving state model is to be generated by the driving process, the desktop process transmits the animation generation information to the driving process. After the driving process receives the animation generation information, the vehicle animation may be displayed between two images of the parking state represented by the parking state model and the driving state represented by the driving state model according to the animation generation information.

When the vehicle process is a driving process, and a vehicle animation from a driving state model to a parking state model is to be generated by the driving process, the desktop process transmits the animation generation information to the driving process. After the driving process receives the animation generation information, the vehicle animation may be displayed between two images of the parking state represented by the parking state model and the driving state represented by the driving state model according to the animation generation information.

It should be noted that the vehicle process may be only a parking process, only a driving process, or both a parking process and a driving process. That is to say, there are four ways to generate vehicle animation as follows. (1) Both the process of generating a vehicle animation from a parking state model to a driving state model and the process of generating a vehicle animation from a driving state model to a parking state model are parking processes. (2) Both the process of generating a vehicle animation from a parking state model to a driving state model and the process of generating a vehicle animation from a driving state model to a parking state model are driving processes. (3) A process of generating a vehicle animation from a parking state model to a driving state model is a parking process, and a process of generating a vehicle animation from a driving state model to a parking state model is a driving process. (4) A process of generating a vehicle animation from a parking state model to a driving state model is a driving process, and a process of generating a vehicle animation from a driving state model to a parking state model is a parking process. However, the present invention is not particularly limited to the above ways.

In an optional example, the desktop process loads a second vehicle model, and hides a first vehicle model. The first vehicle model and the second vehicle model represent two driving states respectively.

In an optional example, Fig. 2 is a schematic flowchart of a method for loading the second vehicle model. As shown in Fig. 2, the method may at least include: S210, a first vehicle image corresponding to the first vehicle model is obtained by the desktop process, and the second vehicle model is loaded.

In an optional example, the first vehicle model includes a parking state model or a driving state model; and the second vehicle model includes a driving state model or a parking state model. The parking state model represents that the first vehicle model or the second vehicle model is in a parking state. The driving state model represents that the first vehicle model or the second vehicle model is in a driving state.

When the vehicle process is a parking process, after a vehicle animation from a parking state model to a driving state model is displayed in the parking process, the desktop process may capture a last image of the vehicle animation at this time as the first vehicle image, and load the second vehicle model at this time, that is, the driving state model.

When the vehicle process is a driving process, after a vehicle animation from a driving state model to a parking state model is displayed in the driving process, the desktop process may capture a last image of the vehicle animation at this time as the first vehicle image, and load the second vehicle model at this time, that is, the parking state model.

It should be noted that the first vehicle image is not limited to only the last image of the first vehicle model in any case, but may also be a plurality of images, or other images than the last image, but is not particularly limited thereto.

S220, a first blended animation is generated by the desktop process according to the first vehicle image, and the first blended animation is displayed.

In response to the loading of the second vehicle model is completed, the first blended animation, such as an Alpha (animation effect of gradient transparency) animation, may be generated according to the first vehicle image, such that the first vehicle model and the second vehicle model are blended and aligned.

Further, the corresponding parking state model or driving state model can also be hidden to see all the animation from the parking state model to the driving state model or from the driving state model to the parking state model in a complete one-shot manner.

In another aspect, when the vehicle process is a parking process, after a vehicle animation from the driving state model to the parking state model is displayed in the parking process, the desktop process may load the first vehicle model, that is, the parking state model, and hide the second vehicle model, that is, the driving state model.

In yet another aspect, when the vehicle process is a driving process, and the animation from the parking state model to the driving state model is displayed in the driving process, hiding and loading of a vehicle model and a display process of the blended animation are further implemented.

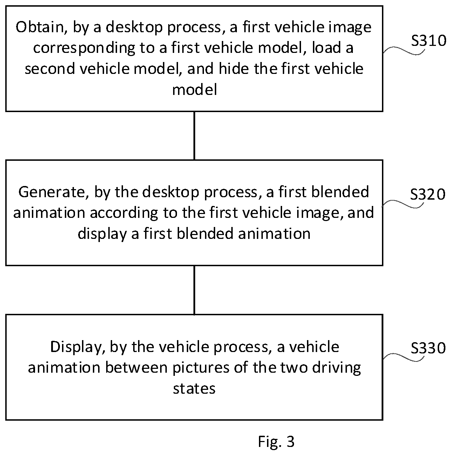

In an optional example, Fig. 3 is a schematic flowchart of a method for displaying a vehicle animation. As shown in Fig. 3, the method may at least include: S310, a first vehicle image corresponding to a first vehicle model is obtained by the desktop process, a second vehicle model is loaded, and the first vehicle model is hidden.

When the vehicle process is a driving process, prior to the vehicle animation from the parking state model to the driving state model is displayed in the driving process, the desktop process may first capture the last image of the first vehicle model, that is, the parking state model, as the first vehicle image, and load the second vehicle model, that is, the driving state model at this time.

Furthermore, the parking state model may be hidden at this time.

S320, a first blended animation is generated by the desktop process according to the first vehicle image, and the first blended animation is displayed.

In response to the loading of the driving state model is completed, the desktop process may generate the first blended animation, such as an Alpha animation, according to the first vehicle image, and display the first blended animation, such that the first vehicle model and the second vehicle model are blended and aligned.

S330, the vehicle animation is displayed by the vehicle process between the pictures of the two driving states.

After displaying the first blended animation, the driving process may further display the vehicle animation, so as to completely display the one-shot animation from the parking state model to the driving state model on the driving process. To make the one-shot vehicle animation seamlessly connected, it must be guaranteed that 3D model resources of the first vehicle model and the second vehicle model are the same.

In an optional example, the desktop process obtains a first vehicle resource of the first vehicle model and a second vehicle resource of the second vehicle model, so as to load the first vehicle model and the second vehicle model according to the first vehicle resource and the second vehicle resource respectively. The first vehicle resource is the same as the second vehicle resource.

The first vehicle resource and the second vehicle resource may include shapes, sizes, and scaling ratios corresponding to the parking state model and the driving state model respectively, but are not particularly limited thereto.

Moreover, since the parking state model is generally displayed in a stereoscopic view, and the driving state model is generally displayed in a top view, in different views, the parking state model and the driving state model may have different corresponding sizes due to different viewing angles. In this case, the first vehicle resource and/or the second vehicle resource may be used for adjustment.

The stereoscopic view (also known as "three-dimensional stereoscopic view" or "three-dimensional stereoscopic picture") is a flat image from which a stereoscopic effect can be felt. Viewing such images usually requires special methods or equipment. The stereoscopic view is originally used to represent a pair of images that need to be viewed through a stereoscope. Axonometric drawings in mechanical drawing presents a desirable stereoscopic perception because it can show a shape of an object in three directions (such as front, top and side) on one projection diagram, so it is called a stereoscopic view. The stereoscopic view is the most intuitive graphic to represent a three-dimensional model of an object and is able to vividly describe morphological characteristics and structural relations of a cartographic objects distributed in planes and space.

It should be noted that the parking state model and the driving state model are not only limited to a display mode of a stereoscopic view, a top view, etc., but also can be displayed in an upper left viewing angle of the vehicle, in an upper right viewing angle of the vehicle, or in any angle or direction of the vehicle in space, but are not particularly limited thereto.

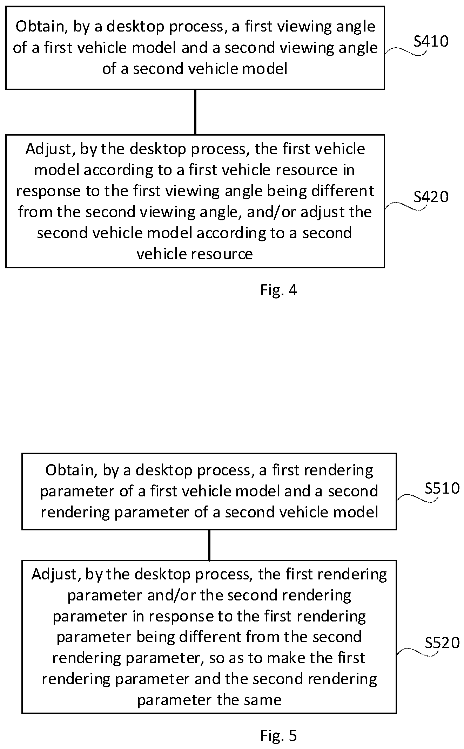

In an optional example, Fig. 4 is a schematic flowchart of a method for adjusting two vehicle models. As shown in Fig. 4, the method may at least include: S410, a first viewing angle of the first vehicle model and a second viewing angle of the second vehicle model are obtained by the desktop process.

The first viewing angle and the second viewing angle may be any viewing form such as a stereoscopic view, a top view, and/or a front view separately, or may be viewing angle forms of other categories, but are not particularly limited thereto.

S420, the first vehicle model is adjusted by the desktop process according to the first vehicle resource when the first viewing angle is different from the second viewing angle, and/or the second vehicle model is adjusted according to the second vehicle resource.

After the first viewing angle and the second viewing angle are obtained, the desktop process may adjust a size of the first vehicle model at the first viewing angle to the size represented by the first vehicle resource. The desktop process may also adjust a size of the second vehicle model at the second viewing angle to the size represented by the second vehicle resource, but is not particularly limited thereto.

It should be noted that adjusting which vehicle model may be determined according to whether the size of the first vehicle model is the same as that represented by the first vehicle resource and whether the size of the second vehicle model is the same as that represented by the second vehicle resource, and alternatively, a current size of one of the vehicle models may be used as a criterion for adjustment, but are not particularly limited thereto.

Moreover, considering that the rendering parameters corresponding to the first vehicle model and the second vehicle model are independent, it is necessary to consider whether rendering in a dark color mode and a light color mode in the processes corresponding to the two models is consistent, and otherwise the problem of inconsistent rendering effects of a vehicle animation occurs.

In an optional example, Fig. 5 is a schematic flowchart of another method for adjusting two vehicle models. As shown in Fig. 5, the method may at least include: S510, a first rendering parameter of the first vehicle model and a second rendering parameter of the second vehicle model are obtained by the desktop process.

The first rendering parameter and the second rendering parameter may be the rendering parameters corresponding to a dark color mode or a light color mode respectively, and alternatively, a different rendering mode or rendering environment may be represented by the rendering parameters, but are not particularly limited thereto.

S520, the first rendering parameter and/or the second rendering parameter is adjusted by the desktop process when the first rendering parameter is different from the second rendering parameter, so as to make the first rendering parameter and the second rendering parameter the same.

When the first rendering parameter is different from the second rendering parameter, the first rendering parameter and/or the second rendering parameter may be adjusted, such that both the first rendering parameter and the second rendering parameter are consistent with the rendering parameter in the system. Then a rendering process of the vehicle animation is executed, such that environments in which the parking state model and the driving state model are located in the finally presented vehicle animation are consistent.

It should be noted that the first rendering parameter and the second rendering parameter are not limited to represent an external environment such as day or night in which the vehicle model is located, but also include rendering performance representing display aspects such as brightness of the vehicle model in the environment such as day or night, but are not particularly limited thereto.

The method for displaying a vehicle model according to an example of the present invention will be described in detail below in combination with an application scenario.

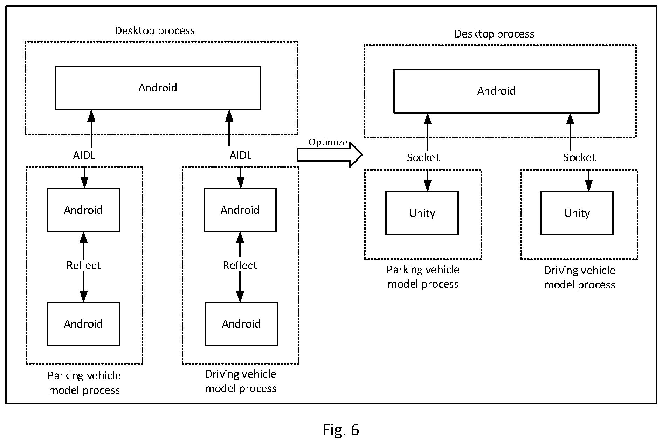

Fig. 6 is a schematic diagram of comparison of two communication modes in the related art and in the method for displaying a vehicle model. As shown in Fig. 6, a left part represents the communication mode adopted in the related art, which uses Android interface definition language (AIDL) and a transmission mode of Android to implement communication, and relies heavily on Android layer relay.

AIDL is a description language configured to define a communication interface between a server and a client, which can be used for generating a code for inter process communication (IPC).

A right part represents the communication mode adopted in the method for displaying a vehicle model in an application scenario. The communication mode uses Socket communication as an inter-process communication solution, to provide an efficient solution for communication between the desktop process and two vehicle model processes.

Compared to relying on Android layer relay in the related art, Socket communication directly establishes connections between applications, so as to avoid performance consumption caused by additional relay. In this way, communication delay can be significantly reduced, such that a speed of response of an animation between different processes is guaranteed.

Socket communication has the advantage of direct point-to-point connection, such that data transmission is more rapid and more efficient. After establishing Socket connection between the desktop process and the vehicle model process, the desktop process and the vehicle process can directly transfer data without additional processing through a middle layer, such that complexity and delay of communication are greatly reduced.

Moreover, Socket communication has high flexibility and extensibility. Developers can choose an appropriate communication protocol and data format according to specific requirements so as to satisfy communication requirements of different scenarios. By optimizing parameters and settings of Socket communication, efficiency and stability of communication can be further improved to guarantee timely response to operations such as an animation with high real-time requirements.

In general, by using Socket communication as an inter-process communication solution, the desktop process and the vehicle model process can exchange data efficiently, such that communication delay is effectively reduced, smoothness and a response speed of an animation and other operations are guaranteed, and users are provided with a more smooth and pleasant experience.

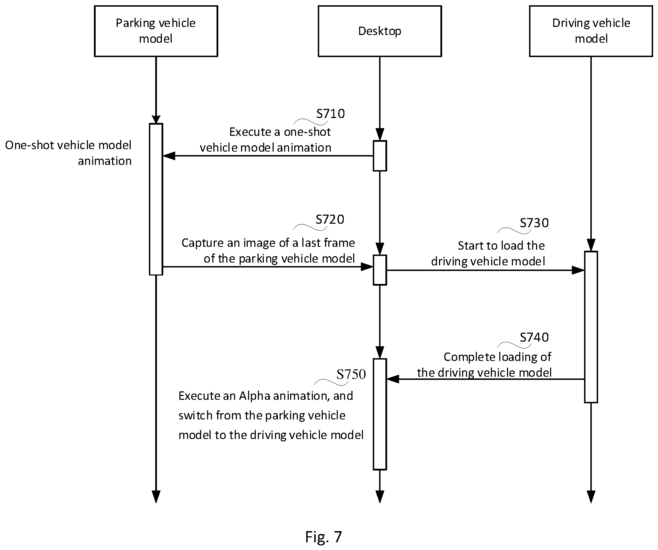

Fig. 7 is a schematic flowchart of a first method for displaying a vehicle animation in an application scenario. As shown in Fig. 7, when a one-shot vehicle animation from a parking state model to a driving state model is to be generated by the parking process, the desktop process transmits animation generation information to the parking process.

The animation generation information includes one or more of an animation duration, an animation delay, an animation playback curve and animation starting and ending positions.

It should be noted that the ending position in the animation starting and ending positions in this case is a position where the driving state model is located. Considering that the position is adjustable, a final position of the driving state model can be obtained in advance.

S710, a one-shot vehicle model animation is executed.

After the parking process receives the animation generation information, the vehicle animation may be displayed between two images of the parking state represented by the parking state model and the driving state represented by the driving state model according to the animation generation information.

S720, an image of a last frame of a parking vehicle model is captured.

After a vehicle animation from a parking state model to a driving state model is displayed in the parking process, the desktop process may capture a last image of the parking state model at this time.

S730, a driving vehicle model is loaded.

Further, the desktop process may also start to load the driving state model.

S740, loading of the driving vehicle model is completed.

S750, an Alpha animation is executed, and the parking vehicle model is switched to the driving vehicle model.

The Alpha animation is executed with the last captured image, and the parking vehicle model is hidden, such that the one-shot animation of the process from the parking vehicle model to the driving vehicle model.

Specifically, a more flexible and seamless view switching effect is achieved by controlling the hierarchy and animation between two Surfaces through a Surface Control related interface in Android. Surface Control is an important interface configured to manage a window Surface in an Android system and through which parameters such as an attribute, a position and a size of Surface can be directly controlled as well as an animation effect of Surface can be achieved.

In an application, through the Surface Control interface, developers can implement a variety of view switching effect, such as fade-in and fade-out, slide switching, zoom animation, and so on. These switching effects not only enhance a user experience, but also make the interface more vivid and engaging.

Using Surface Control to control the hierarchy of the Surface is also one important way to achieve seamless view switching. By adjusting a Z axis order of the Surfaces, a display order of different Surfaces on a screen can be guaranteed, so as to achieve view overlay and switching effects. For example, when implementing page switching, a seamless page switching effect is achieved by adjusting a position of a Surface of a target page on a Z axis to above the current page.

Moreover, more complex animation effects, such as view rotation, transparency changes, etc., can also be achieved through the Surface Control interface. By combining the various functions provided by Surface Control, developers can achieve rich interface interaction effects, and a more smooth and more enjoyable experience is offered to the users.

In general, using the Surface Control related interface in Android to control the hierarchy and animation between two Surfaces can achieve a more flexible and seamless view switching effect, add more possibilities for application interface interaction and improve quality of a user experience.

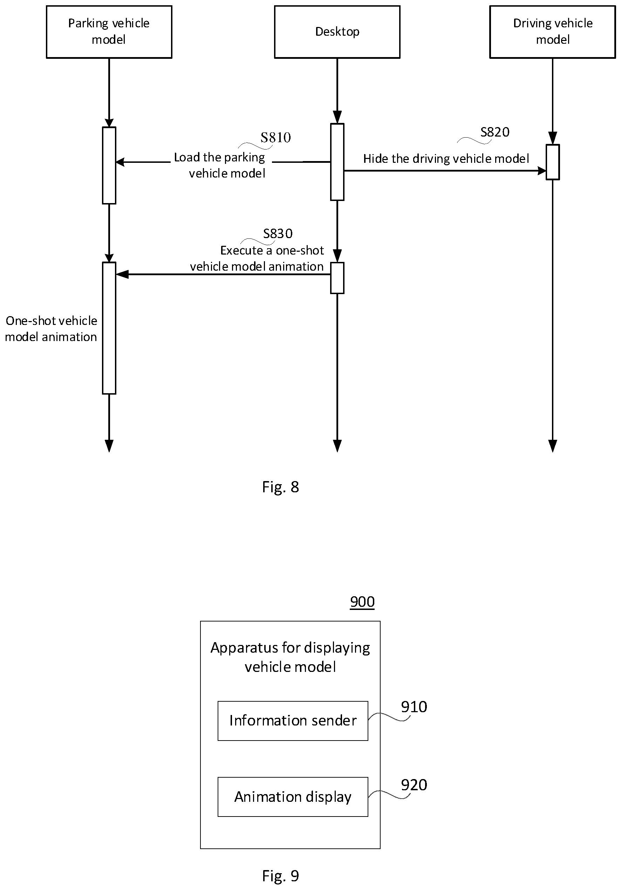

Fig. 8 is a schematic flowchart of a second method for displaying a vehicle animation in an application scenario. As shown in Fig. 8, when a vehicle animation from a driving state model to a parking state model is generated by the parking process, the desktop process may transmit animation generation information to the parking process.

The animation generation information may include one or more of an animation duration, an animation delay, an animation playback curve and animation starting and ending positions.

It should be noted that the starting position in the animation starting and ending positions in this case is a position where the driving state model is located. Considering that the position is adjustable, a starting position of the driving state model can be obtained in advance.

S810, a parking vehicle model is loaded.

Specifically, the desktop process loads the parking vehicle model.

S820, a driving vehicle model is hidden.

Specifically, the desktop process may also hide the driving vehicle model.

S830, a one-shot vehicle model animation is executed.

After the parking process receives the animation generation information, the vehicle animation may be displayed between two images of the parking state represented by the parking state model and the driving state represented by the driving state model according to the animation generation information.

When a vehicle animation from a driving state model to a parking state model is generated by the driving process, the desktop process may transmit one-shot animation generation information to the driving state process.

The animation generation information includes one or more of an animation duration, an animation delay, an animation playback curve and animation starting and ending positions.

After the driving process receives the animation generation information, the vehicle animation may be displayed between two images of the parking state represented by the parking state model and the driving state represented by the driving state model according to the animation generation information.

After a vehicle animation from a driving state model to a parking state model is displayed in the driving process, the desktop process may capture a last image of the driving state model.

Further, the desktop process loads the parking state model.

Further, since a last position of the parking state model is a position where the vehicle is parked before driving, and in this case, a new target position of the parking state model is a position where the vehicle is to be parked after driving, the desktop process may obtain the parking position of the parking state model before driving as a starting position, and update the starting position as a current target position where the vehicle is to be parked.

After loading the parking state model, the desktop process may also hide the driving state model.

Further, the Alpha animation may be executed according to the last captured image to see a complete one-shot animation from the parking state model to the driving state model very smoothly.

Moreover, there is a fourth method for displaying a vehicle animation in the application scenarios.

Specifically, when a vehicle animation from a parking state model to a driving state model is generated through the driving process, the desktop process may transmit animation generation information to the driving state process.

The animation generation information includes one or more of an animation duration, an animation delay, an animation playback curve and animation starting and ending positions.

Prior to the vehicle animation from the parking state model to the driving state model is displayed in the driving process, the desktop process may first capture the last image of the first vehicle model as the first vehicle image, and load the driving state model.

Furthermore, the parking state model may be hidden at this time.

In response to the loading of the driving state model is completed, the desktop process may generate, for example, an Alpha animation, according to the first vehicle image, and display the first blended animation, such that the driving state model and the parking state model are blended and aligned.

After displaying the first blended animation, the driving process may further display the vehicle animation, so as to completely display the one-shot animation from the parking state model to the driving state model on the driving process.

It should be noted that the vehicle process may be only a parking process, only a driving process, or both a parking process and a driving process. That is to say, there are four ways to generate vehicle animation as follows. (1) Both a process of generating a vehicle animation from a parking state model to a driving state model and a process of generating a vehicle animation from a driving state model to a parking state model are parking processes. (2) Both a process of generating a vehicle animation from a parking state model to a driving state model and a process of generating a vehicle animation from a driving state model to a parking state model are driving processes. (3) A process of generating a vehicle animation from a parking state model to a driving state model is a parking process, and a process of generating a vehicle animation from a driving state model to a parking state model is a driving process. (4) A process of generating a vehicle animation from a parking state model to a driving state model is a driving process, and a process of generating a vehicle animation from a driving state model to a parking state model is a parking process. However, the present invention is not particularly limited to the above ways.

To make a one-shot vehicle animation seamless, it is necessary to guarantee that the 3D model resources of the first vehicle model and the second vehicle model are the same. Thus, prior to executing the one-shot vehicle animation, the desktop process may obtain the first vehicle resource of the parking state model and the second vehicle resource of the driving state model, so as to load the parking state model and the driving state model according to the first vehicle resource and the second vehicle resource respectively.

The first vehicle resource and the second vehicle resource may include shapes, sizes, and scaling ratios corresponding to the parking state model and the driving state model respectively, but are not particularly limited thereto.

Moreover, since the parking state model is generally displayed in a stereoscopic view, and the driving state model is generally displayed in a top view, in different views, the parking state model and the driving state model may have different corresponding sizes due to different viewing angles. In this case, the first vehicle resource and/or the second vehicle resource may be used for adjustment.

It should be noted that the parking state model and the driving state model are not only limited to a display mode of a stereoscopic view, a top view, etc., but also can be displayed in an upper left viewing angle of the vehicle, in an upper right viewing angle of the vehicle, or in any angle or direction of the vehicle in space, but are not particularly limited thereto.

Specifically, the desktop process obtains a first viewing angle of the parking state model and a second viewing angle of the driving state model.

The first viewing angle and the second viewing angle may be any viewing form such as a stereoscopic view, a top view, and/or a front view separately, or may be viewing angle forms of other categories, but are not particularly limited thereto.

The desktop process adjusts the parking state model according to the first vehicle resource, and/or adjusts the driving state model according to the second vehicle resource when the first viewing angle is different from the second viewing angle.

After the first viewing angle and the second viewing angle are obtained, the desktop process may be used to adjust a size of the parking state model at the first viewing angle to the size represented by the first vehicle resource, and alternatively, the desktop process may also be used to adjust a size of the driving state model at the second viewing angle to the size represented by the second vehicle resource, but are not particularly limited thereto.

It should be noted that adjusting which vehicle model may be determined according to whether the size of the parking state model is the same as that represented by the first vehicle resource and whether the size of the driving state model is the same as that represented by the second vehicle resource, and alternatively, a current size of one of the vehicle models may be used as a criterion for adjustment, but are not particularly limited thereto.

Moreover, considering that the rendering parameters corresponding to the parking state model and the driving state model are independent, it is necessary to consider whether rendering in a dark color mode and a light color mode in processes corresponding to the two models is consistent, and otherwise the problem of inconsistent rendering effects of a vehicle animation occurs.

Thus, the desktop process may be configured to obtain the first rendering parameter of the parking state model and the second rendering parameter of the driving state model.

The first rendering parameter and the second rendering parameter may be rendering parameters corresponding to a dark color mode or a light color mode respectively, and alternatively, a different rendering mode or rendering environment may be represented by rendering parameters, but are not particularly limited thereto.

The desktop process adjusts the first rendering parameter and/or the second rendering parameter when the first rendering parameter is different from the second rendering parameter, so as to make the first rendering parameter and the second rendering parameter the same.

When the first rendering parameter is different from the second rendering parameter, the first rendering parameter and/or the second rendering parameter may be switched, such that both the first rendering parameter and the second rendering parameter are consistent with a rendering parameter in a system. Then a rendering process of the vehicle animation is executed, such that environments in which the parking state model and the driving state model are located in the finally presented vehicle animation are consistent.

It should be noted that the first rendering parameter and the second rendering parameter are not limited to represent an external environment such as day or night in which the vehicle model is located, but also include rendering performance representing display aspects such as brightness of the vehicle model in the environment such as day or night, but are not particularly limited thereto.

According to examples of the present invention, the vehicle animation is displayed in a mode by transmitting the animation generation information to the vehicle process by the desktop process. On one hand, a switching mode of two vehicle models is provided in an inter-process communication mode, such that technical problems of poor stability and high resource consumption caused by using a single process mode in the related art are solved. On the other hand, the vehicle animation is used as a transition effect when switching the two vehicle models, such that the calculation processing time is reserved for a change of vehicle models, which brings a smoother animation effect and visual experience to the user, provides a better interactive experience in the process of starting and stopping a vehicle by the user, and offers a more immersive sensory experience to the user in application scenarios such as smart cockpits.

Moreover, according to examples of the present invention, an apparatus for displaying a vehicle model is further provided. Fig. 9 is a schematic structural diagram of an apparatus for displaying a vehicle model. As shown in Fig. 9, the apparatus 900 for displaying a vehicle model may include an information sender 910 and an animation display 920. Specifically:
the information sender 910 is configured to transmit, by a desktop process, animation generation information to a vehicle process; and
the animation display 920 is configured to generate, by the vehicle process, a vehicle animation according to the animation generation information, and display the vehicle animation between pictures of two driving states.

In some examples of the present invention, the apparatus 900 for displaying a vehicle model is configured to:
load, by the desktop process, a second vehicle model, and hide a first vehicle model, where the first vehicle model and the second vehicle model represent two driving states respectively.

In some examples of the present invention, the apparatus 900 for displaying a vehicle model is configured to:
obtain, by the desktop process, a first vehicle image corresponding to the first vehicle model, and load the second vehicle model; and
generate, by the desktop process, a first blended animation according to the first vehicle image, and display the first blended animation.

In some examples of the present invention, the first vehicle model includes a parking state model or a driving state model; and the second vehicle model includes a driving state model or a parking state model. The parking state model represents that the first vehicle model or the second vehicle model is in a parking state. The driving state model represents that the first vehicle model or the second vehicle model is in a driving state.

In some examples of the present invention, the apparatus 900 for displaying a vehicle model is configured to:
obtain, by the desktop process, a first rendering parameter of the first vehicle model and a second rendering parameter of the second vehicle model; and
adjust, by the desktop process, the first rendering parameter and/or the second rendering parameter in response to the first rendering parameter being different from the second rendering parameter, so as to make the first rendering parameter and the second rendering parameter the same.

In some examples of the present invention, the apparatus 900 for displaying a vehicle model is configured to:
obtain, by the desktop process, a first vehicle resource of the first vehicle model and a second vehicle resource of the second vehicle model, so as to load the first vehicle model and the second vehicle model according to the first vehicle resource and the second vehicle resource respectively, where the first vehicle resource is the same as the second vehicle resource.

In some examples of the present invention, the apparatus 900 for displaying a vehicle model is configured to:
obtain, by the desktop process, a first viewing angle of the first vehicle model and a second viewing angle of the second vehicle model; and
adjust, by the desktop process, the first vehicle model according to the first vehicle resource in response to the first viewing angle being different from the second viewing angle, and/or adjust the second vehicle model according to the second vehicle resource.

In some examples of the present invention, the animation display 920 is configured to:
obtain, by the desktop process, a first vehicle image corresponding to a first vehicle model, load a second vehicle model, and hide the first vehicle model;
generate, by the desktop process, a first blended animation according to the first vehicle image, and display the first blended animation; and
display, by the vehicle process, the vehicle animation between the pictures of the two driving states.

In some examples of the present invention, the vehicle process includes a parking process and/or a driving process.

In some examples of the present invention, the animation generation information includes one or more of an animation duration, an animation delay, an animation playback curve and animation starting and ending positions.

In some examples of the present invention, the desktop process and the vehicle process are interactively connected in a Socket inter-process communication manner.

A specific way of each module of the apparatus in the above example to execute the operation has been described in detail with reference to the examples relating to the method and will not be described in detail here.

The present invention further provides a non-transitory computer-readable storage medium. The non-transitory computer-readable storage medium stores a computer program instruction, where when executed by a processor, the program instruction implements steps of the method for displaying a vehicle model provided in the present invention.

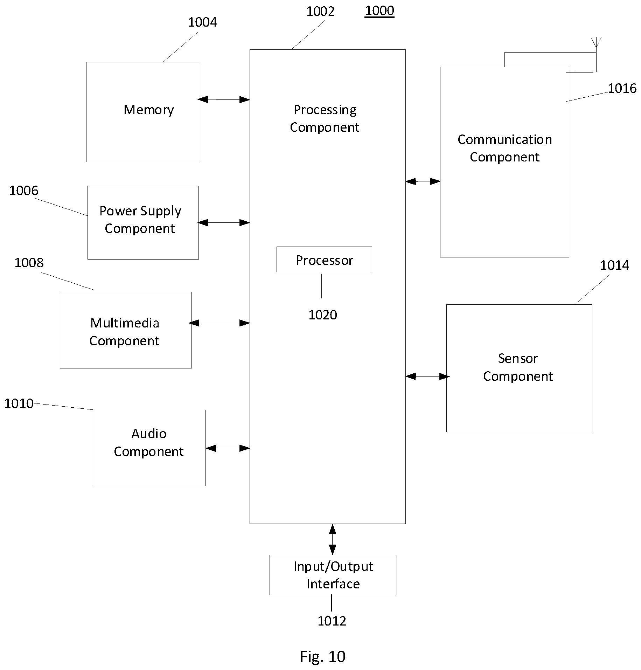

Fig. 10 is a block diagram of another apparatus 1000 for displaying a vehicle model according to an example. For example, the apparatus 1000 may be a mobile phone, a computer, a digital broadcasting terminal, a message receiving and transmitting device, a game console, a tablet device, a medical device, a fitness device, a personal digital assistant, etc.

With reference to Fig. 10, the apparatus 1000 may include one or more of a processing component 1002, a memory 1004, a power supply component 1006, a multimedia component 1008, an audio component 1010, an input/output interface 1012, a sensor component 1014, and a communication component 1016.

The processing component 1002 generally controls overall operations of the apparatus 1000, for example, operations associated with display, phone calls, data communication, camera operations, and recording operations. The processing component 1002 may include one or more processors 1020 to execute an instruction, so as to complete all or some steps of the method above. Moreover, the processing component 1002 may include one or more modules to facilitate interaction between the processing component 1002 and other components. For example, the processing component 1002 may include a multimedia module, so as to facilitate the interaction between the multimedia component 1008 and the processing component 1002.

The memory 1004 is configured to store various types of data to support the operations on the apparatus 1000. Instances of such data include an instruction, operated on the apparatus 1000, for any application or method, contact data, phonebook data, messages, pictures, videos, etc. The memory 1004 may be implemented through any type of volatile or non-volatile storage devices or their combinations, such as a static random-access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, and an optical disk.

The power supply component 1006 supplies power to the various components of the apparatus 1000. The power supply component 1006 may include a power supply management system, one or more power supplies, and other components associated with power generation, management, and distribution for the apparatus 1000.

The multimedia component 1008 includes a screen that provides an output interface between the apparatus 1000 and a user. In some examples, the screen may include a liquid crystal display (LCD) and a touch panel (TP). If including the touch panel, the screen may be implemented as a touch screen, so as to receive an input signal from the user. The touch panel includes one or more touch sensors, so as to sense touches, swipes, and gestures on the touch panel. The touch sensor may sense a boundary of a touch or swipe action and measure time and pressure associated with a touch or swipe operation. In some examples, the multimedia component 1008 includes a front-facing camera and/or a rear-facing camera. When the apparatus 1000 is in an operation mode, such as a photographing mode or a video mode, the front-facing camera and/or the rear-facing camera may receive external multimedia data. Each of the front-facing camera and the rear-facing camera may be a fixed optical lens system or have a focal length and an optical zoom capability.

The audio component 1010 is configured to output and/or input audio signals. For example, the audio component 1010 includes a microphone (MIC) configured to receive external audio signals when the apparatus 1000 is in the operation mode, for example, a calling mode, a recording mode, or a speech recognition mode. The audio signals received may be further stored in the memory 1004 or transmitted via the communication component 1016. In some examples, the audio component 1010 further includes a speaker configured to output an audio signal.

The input/output interface 1012 provides an interface between the processing component 1002 and a peripheral interface module, which may be a keyboard, a click wheel, a button, etc. These buttons may include, but are not limited to, a home button, a volume button, a start button, and a lock button.

The sensor component 1014 includes one or more sensors for providing state assessments of various aspects for the apparatus 1000. For example, the sensor component 1014 may detect an on/off state of the apparatus 1000, and relative positioning of the components. For example, the components are the display and the keypad of the apparatus 1000. The sensor component 1014 may also detect a change in position of the apparatus 1000 or one component of the apparatus 1000, the presence or absence of contact between the user and the apparatus 1000, an orientation or acceleration/deceleration of the apparatus 1000, and a change in temperature of the apparatus 1000. The sensor component 1014 may include a proximity sensor configured to detect the presence of nearby objects in the absence of any physical contact. The sensor component 1014 may further include a light sensor, such as a complementary metal-oxide-semiconductor transistor (CMOS) or charge coupled device (CCD) image sensor configured to be used in imaging application. In some examples, the sensor component 1014 may further include an acceleration sensor, a gyroscope sensor, a magnetic sensor, a pressure sensor, or a temperature sensor.

The communication component 1016 is configured to facilitate communication between the apparatus 1000 and other device in a wired or wireless mode. The apparatus 1000 may access a wireless network based on a communication standard, for example, Wi-Fi, 2G, or 3G, or their combinations. In an example, the communication component 1016 receives a broadcast signal or broadcast related information from an external broadcast management system via a broadcast channel. In an example, the communication component 1016 further includes a near field communication (NFC) module, so as to facilitate short-range communication. For example, the NFC module may be implemented on the basis of a radio frequency identification (RFID) technology, an infrared data association (IrDA) technology, an ultra-wide band (UWB) technology, a Bluetooth (BT) technology, etc.

In an example, the apparatus 1000 may be implemented by one or more application specific integrated circuits (ASICs), digital signal processors (DSPs), digital signal processing devices (DSPDs), programmable logic devices (PLDs), field programmable gate arrays (FPGAs), controllers, microcontrollers, microprocessors, or other electronic elements for executing the method above.

A non-transitory computer-readable storage medium including an instruction, for example, a memory 1004 including an instruction is further provided in an example. The above instruction may complete the above method by being executed by a processor 1020 of an apparatus 1000. For example, the non-transitory computer-readable storage medium may be an ROM, a random-access memory (RAM), a compact disk read-only memory (CD-ROM), a magnetic tape, a floppy disk, an optical data storage device, etc.

The above apparatus may be a part of a separate electronic device besides a separate electronic device. For example, in one example, the apparatus may be an integrated circuit (IC) or a chip, where the integrated circuit may be an IC or a set of a plurality of ICs; and the chip may include, but is not limited to, the following categories: a graphics processing unit (GPU), a central processing unit (CPU), a field programmable gate array (FPGA), a digital signal processor (DSP), an application specific integrated circuit (ASIC), a system on chip (SOC), etc. The above integrated circuit or chip may be configured to execute an executable instruction (or code), so as to implement the above method for displaying a vehicle model. The executable instruction may be stored in the integrated circuit or chip or retrieved from another device or apparatus. For example, the integrated circuit or chip includes a processor, a memory, and an interface configured for communication with other devices. The executable instruction may be stored in the memory and implements the above method for displaying a vehicle model when executed by the processor. Alternatively, the integrated circuit or chip may receive the executable instruction through the interface and transmit the executable instruction to the processor for execution, so as to implement the above method.

A computer program product is further provided in another example. The computer program product encompasses a computer program executable by a programmable device, where the computer program has a code portion configured to execute the above method for displaying a vehicle model when executed by the programmable device.

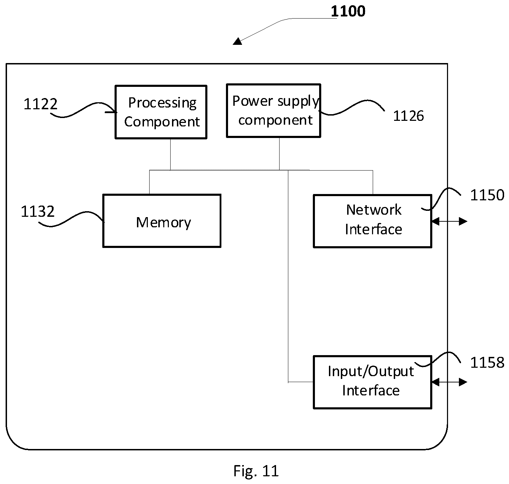

Fig. 11 is a block diagram of yet another apparatus 1100 for displaying a vehicle model according to an example. For example, the device 1100 may be provided as a server. With reference to Fig. 11, the apparatus 1100 includes a processing component 1122 that further includes one or more processors, and a memory resource represented by a memory 1132 and configured to store an instruction executable by the processing component 1122, for example, an application. The applications stored in the memory 1132 may include one or more modules that each correspond to a set of instructions. Further, the processing component 1122 is configured to execute the instructions, so as to implement the above method for displaying a vehicle model.

The apparatus 1100 may further include a power supply component 1126 configured to execute power component management of the apparatus 1100, a wired or wireless network interface 1150 configured to connect the apparatus 1100 to a network, and an input/output interface 1158. The apparatus 1100 may operate an operating system stored in the memory 1132.

Those skilled in the art will readily conceive of other embodiments of the present invention after considering the description and practicing the present invention disclosed here. The present invention is intended to cover any variations, uses or adaptive changes of the present invention, which follow the general principles of the present invention and include common general knowledge or conventional technical means in the art not disclosed in the present invention. The description and examples are merely deemed illustrative, and the true scope and spirit of the present invention are indicated by the following claims.

It should be understood that the present invention is not limited to precise structures that have been described above and shown in the accompanying drawings, and various modifications and changes can be made without departing from the scope of the present invention. The scope of the present invention is limited merely by the appended claims.

## Claims

1. A method for displaying a vehicle model, comprising:
transmitting (S110), by a desktop process, animation generation information to a vehicle process; and
generating (S120), by the vehicle process, a vehicle animation according to the animation generation information, and displaying the vehicle animation between pictures of two driving states.

2. The method for displaying a vehicle model according to claim 1, wherein after displaying (S120) the vehicle animation between pictures of the two driving states, the method further comprises:
loading, by the desktop process, a second vehicle model, and hiding a first vehicle model, wherein the first vehicle model and the second vehicle model represent the two driving states respectively.

3. The method for displaying a vehicle model according to claim 2, wherein loading, by the desktop process, the second vehicle model comprises:
obtaining (S210), by the desktop process, a first vehicle image corresponding to the first vehicle model, and loading the second vehicle model; and
generating (S220), by the desktop process, a first blended animation according to the first vehicle image, and displaying the first blended animation.

4. The method for displaying a vehicle model according to claim 2 or 3, wherein the first vehicle model comprises a parking state model or a driving state model; the second vehicle model comprises a driving state model or a parking state model; and the parking state model represents that the first vehicle model or the second vehicle model is in a parking state, and the driving state model represents that the first vehicle model or the second vehicle model is in a driving state.

5. The method for displaying a vehicle model according to any one of claims 2 to 4, wherein prior to transmitting (S110), by the desktop process, the animation generation information to the vehicle process, the method further comprises:
obtaining (S510), by the desktop process, a first rendering parameter of the first vehicle model and a second rendering parameter of the second vehicle model; and
adjusting (S520), by the desktop process, the first rendering parameter and/or the second rendering parameter in response to the first rendering parameter being different from the second rendering parameter, so as to make the first rendering parameter and the second rendering parameter the same.

6. The method for displaying a vehicle model according to any one of claims 2 to 5, wherein prior to transmitting (S110), by the desktop process, the animation generation information to the vehicle process, the method further comprises:
obtaining, by the desktop process, a first vehicle resource of the first vehicle model and a second vehicle resource of the second vehicle model, so as to load the first vehicle model and the second vehicle model according to the first vehicle resource and the second vehicle resource respectively, wherein the first vehicle resource is the same as the second vehicle resource.

7. The method for displaying a vehicle model according to claim 6, wherein prior to the vehicle process displays (S120) the vehicle animation according to the animation generation information, the method further comprises:
obtaining (S410), by the desktop process, a first viewing angle of the first vehicle model and a second viewing angle of the second vehicle model; and
adjusting (S420), by the desktop process, the first vehicle model according to the first vehicle resource in response to the first viewing angle being different from the second viewing angle, and/or adjusting the second vehicle model according to the second vehicle resource.

8. The method for displaying a vehicle model according to any one of claims 1 to 7, wherein displaying (S120) the vehicle animation between pictures of the two driving states comprises:
obtaining (S310), by the desktop process, a first vehicle image corresponding to a first vehicle model, loading a second vehicle model, and hiding the first vehicle model;
generating (S320), by the desktop process, a first blended animation according to the first vehicle image, and displaying the first blended animation; and
displaying (S330), by the vehicle process, the vehicle animation between the pictures of the two driving states.

9. The method for displaying a vehicle model according to any one of claims 1 to 8, wherein the vehicle process comprises a parking process and/or a driving process.

10. The method for displaying a vehicle model according to any one of claims 1 to 9, wherein the animation generation information comprises one or more selected from an animation duration, an animation delay, an animation playback curve and animation starting and ending positions.

11. The method for displaying a vehicle model according to any one of claims 1 to 10, wherein the desktop process and the vehicle process are interactively connected in a Socket inter-process communication manner.

12. An apparatus (900) for displaying a vehicle model, comprising:
an information sender (910) configured to transmit, by a desktop process, animation generation information to a vehicle process; and
an animation display (920) configured to generate, by the vehicle process, a vehicle animation according to the animation generation information, and display the vehicle animation between pictures of the two driving states.

13. The apparatus (900) for displaying a vehicle model according to claim 12, wherein the apparatus (900) is configured to:
load, by the desktop process, a second vehicle model, and hide a first vehicle model, wherein the first vehicle model and the second vehicle model represent two driving states respectively.

14. The apparatus (900) for displaying a vehicle model according to claim 13, wherein the apparatus (900) is configured to:
obtain, by the desktop process, a first vehicle image corresponding to the first vehicle model, and load the second vehicle model; and
generate, by the desktop process, a first blended animation according to the first vehicle image, and display the first blended animation.

15. The apparatus (900) for displaying a vehicle model according to claim 13 or 14, wherein the apparatus (900) is configured to:
obtain, by the desktop process, a first rendering parameter of the first vehicle model and a second rendering parameter of the second vehicle model; and
adjust, by the desktop process, the first rendering parameter and/or the second rendering parameter in response to the first rendering parameter being different from the second rendering parameter, so as to make the first rendering parameter and the second rendering parameter the same.
